# EUROPEAN PATENT SPECIFICATION

(11) **EP 3 280 128 B1**
(45) Date of publication and mention of the grant of the patent: **14.05.2025**
(21) Application number: 16773023.3
(22) Date of filing: 30.03.2016
(51) Int. Cl.: H04N 23/60, G08G 1/16, H04N 7/18

(54) **IMAGE PICKUP DEVICE**
BILDAUFNAHMEVORRICHTUNG
DISPOSITIF DE CAPTURE D'IMAGE

(30) Priority: 03.04.2015 JP 2015076435
(43) Date of publication of application: 07.02.2018
(73) Proprietor: Hitachi Astemo, Ltd., Hitachinaka-shi, Ibaraki 312-8503 (JP)
(72) Inventor: SASAMOTO, Manabu, Tokyo 100-8280 (JP); NISHIZAWA, Akihito, Tokyo 100-8280 (JP); NAGASAKI, Takeshi, Hitachinaka-shi Ibaraki 312-8503 (JP)
(74) Representative: MERH-IP Matias Erny Reichl Hoffmann Patentanwälte PartG mbB
(86) International application number: PCT/JP2016/060495
(87) International publication number: WO 2016/159142

(56) References cited:
- WO-A1-2008/094029
- WO-A1-2010/128640
- JP-A- 2001 084 383
- JP-A- 2010 286 926
- US-A1- 2007 140 527
- US-A1- 2012 044 327
- US-A1- 2014 285 621
- US-B1- 7 046 822

## Description

### Technical Field

The present invention relates to an image acquisition device.

### Background Art

As the background art of the present technical field, a device that thins out acquired stereo images and records the thinned-out stereo images on a recording medium is known (see PTL 1) . PTL 2 discloses a device for acquiring a stereo image, in which base data is generated and recorded from an image captured by a base camera according to a first frame rate, and reference data is generated and recorded from an image captured by a reference camera according to a second frame rate. In PTL 3 an image shooting unit is presented which is installed on a vehicle and shoots an image of an area around the vehicle at a set frame rate. PTL 4 concerns a method of detecting objects wherein a distance between a moving or stationary vehicle and one or more objects is calculated by distance-based image segmentation using stereoscopic image processing techniques. PTL 5 discloses a video frame processing method. In PTL 6 a a surveillance method and a system for monitoring a location is shown.

### Citation List

### Patent Literature

PTL 1: Pamphlet of International Publication No. WO2010/128640
PTL 2: US 2012/0044327 A1
PTL 3: US 2007/0140527 A1
PTL 4: US 7 046 822 B1
PTL 5: US 2014/0285621 A1
PTL 6: WO 2008/094029 A1

### Summary of Invention

### Technical Problem

However, in a technique described in PTL 1, processing of an image acquired at a high frame rate is not taken into consideration.

### Solution to Problem

The aforementioned object is solved by the invention according to the independent claim 1. Further preferred developments are described by the dependent claims.

### Advantageous Effects of Invention

According to the present invention, it is possible to provide a low-cost, high performance image acquisition device.

### Brief Description of Drawings

[Fig. 1] Fig. 1 is a diagram illustrating a configuration of an image acquisition device in a first embodiment.
[Fig. 2] Fig. 2 is a diagram illustrating an example of timing of an image-acquisition timing signal in the first embodiment.
[Fig. 3] Fig. 3 is a diagram illustrating a processing flow of the image acquisition device in the first embodiment.
[Fig. 4] Fig. 4 is a diagram illustrating an example of an image acquired by the image acquisition device in the first embodiment.
[Fig. 5] Fig. 5 is a diagram illustrating another example of timing of the image-acquisition timing signal in the first embodiment.
[Fig. 6] Fig. 6 is a diagram illustrating a configuration of an image acquisition device in a second embodiment.
[Fig. 7] Fig. 7 is a diagram illustrating an example of timing of an image-acquisition timing signal in the second embodiment.
[Fig. 8] Fig. 8 is a diagram illustrating a configuration of an image acquisition device in a third embodiment.
[Fig. 9] Fig. 9 is a diagram illustrating a configuration of an image acquisition device in a fourth embodiment.
[Fig. 10] Fig. 10 is a diagram illustrating a configuration of an image acquisition device in a fifth embodiment.

### Description of Embodiments

Hereinafter, embodiments of the present invention will be described using the accompanying drawings.

### (First embodiment)

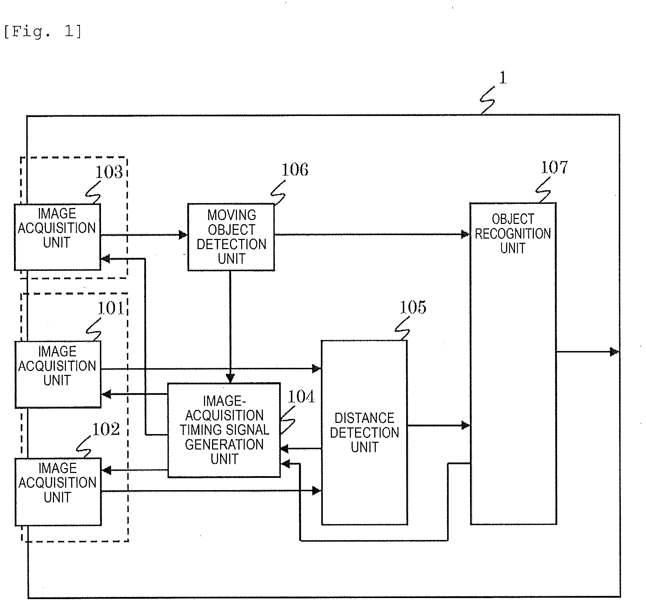

Fig. 1 is a diagram illustrating a configuration of a first embodiment of an image acquisition device of the present invention. 1 indicates the image acquisition device of the present embodiment and the image acquisition device is mounted on, for example, a front side of a vehicle and configured as a portion of a safety system that recognizes a signal, a sign, an obstacle, or the like and supports a driver.

101, 102, and 103 indicate image acquisition units and an optical lens is installed on an image sensor in each of the image acquisition units. Each of the image acquisition units acquires one image each time when an image-acquisition timing signal, which will be described later, is input and outputs the acquired image.

The image acquisition units are installed so as to acquire images having substantially the same range of the angle of views. The image acquisition unit 101 and the image acquisition unit 102 are installed to be apart in right and left sides by a predetermined distance and a distance to a subject can be calculated from deviation, so-called disparity, of images photographed by the image acquisition unit 101 and the image acquisition unit 102.

In Fig. 1, although an example on which constitutional elements of the image acquisition device 1 are accommodated in the same casing is illustrated, for example, the image acquisition units 101, 102, and 103 may be accommodated all together in a casing separate from another casing in which other constitutional elements are accommodated. The image acquisition unit 101 and the image acquisition unit 102 may be accommodated in the same casing in a form in which the image acquisition unit 101 and the image acquisition unit 102 are separated from each other in right and left sides, and the image acquisition unit 103 may be accommodated in another casing (in the figure, a dotted-line frame). Furthermore, the image acquisition units 101, 102, and 103 may be installed on a vehicle by being respectively accommodated in separate casings. In this case, an image signal and the image-acquisition timing signal may be connected using a connection cable (not illustrated). As a method for transmitting an image using a connection cable, there is a bidirectional transmission method using a differential transmission path of a low voltage differential signaling (LVDS) scheme, or the like.

Furthermore, color image sensors are used as the image sensors of the image acquisition unit 101 and the image acquisition unit 102 so as to make it possible to acquire color information of the acquired image. Regarding the image acquisition unit 103, when a black-and-white image sensor is adopted as the image sensor, cost is reduced, but the image sensor may be a color image sensor. It may be configured in such a way that the image acquisition unit 103 and a moving object detection unit 106, to be described later, may be accommodated in the same casing so as to allow a moving object detection result to be output. In this case, since an image itself is not output, it becomes possible to reduce an amount of data to be transmitted.

104 is an image-acquisition timing signal generation unit and the image-acquisition timing signal generation unit outputs, for example, a generated pulse-shaped image-acquisition timing signal to the image acquisition units 101, 102, and 103. As described above, each image acquisition unit acquires one image by receiving one pulse of the image-acquisition timing signal. The image-acquisition timing signal generation unit 104 outputs independent image-acquisition timing signals to the respective image acquisition units 101, 102, and 103 so as to make it possible to control image-acquisition timing of each image acquisition unit.

105 indicates a distance detection unit and the distance detection unit receives images of the image acquisition unit 101 and the image acquisition unit 102 and detects a distance to a subject. As a method for detecting the distance, for example, there is the following method. The distance detection unit 105 captures the images from the image acquisition units 101 and 102, corrects the images with correction values that are measured in advance so as to allow the brightness of respective images to be matched with each other, and corrects the images with correction values that are measured in advance so as to allow horizontal positions of respective images to be matched with each other. Measuring of the correction values is performed in a manufacturing process of the image acquisition device. An image of a specific subject is acquired by each device to which the correction values are not yet applied, brightness correction values for respective pixels such that the brightness of the acquired image becomes uniform, image rectifying values for respective pixels such that the image becomes horizontal are obtained, and the brightness correction values and the image rectifying values are stored in, for example, a non-volatile memory (not illustrated), as respective correction tables for each device.

Next, a disparity calculation is performed. As described above, the image acquisition unit 101 and the image acquisition unit 102 are installed to be apart in right and left sides by a predetermined distance and thus, the acquired images have disparity. The disparity is calculated. As a disparity calculation method, for example, there is a block matching scheme. The distance detection unit 105 searches, for example, an area in which the same subject, which is on an image of the image acquisition unit 102 and corresponds to a small block area of a predetermined size, which is cut out from an image of the image acquisition unit 101, is photographed in the horizontal direction. A difference between positions of block areas coincident with each other in the image acquisition unit 101 and the image acquisition unit 102 is disparity.

Matters described above are performed over the entire image. As a coincidence and comparison method, for example, a position at which a total sum of differences between the brightness of pixels within the block area is small is regarded as disparity. A method for obtaining the distance from focal distances of lenses of the image acquisition unit 101 and the image acquisition unit 102, a distance between the image acquisition unit 101 and the image acquisition unit 102, disparity obtained as described above, and a pixel pitch of an image-acquisition sensor is known. However, the distance calculation method is not limited thereto.

106 indicates the moving object detection unit and the moving object detection unit receives the image of the image acquisition unit 103 and detects movement of the subject. As a movement detection method, for example, there is the following method. The moving object detection unit 106 captures the image from the image acquisition unit 103 and detects a temporal change of the fetched image. As a temporal change detection method, for example, there is also a block matching scheme.

The moving object detection unit 106 sequentially accumulates, for example, a plurality of images of the image acquisition unit 103 and searches an area in which the same subject, which is on a next image and corresponds to a small block area of a predetermined size, which is cut out from a certain image, is photographed in the vertical and lateral directions. The positions at which block areas coincide with each other are the direction and a movement amount in which the subject in the block area is moved. As a coincidence and comparison method, similar to the distance detection, there is a method for obtaining a position at which a total sum of differences between the brightness of pixels within the block area is small, or the like.

Matters described above are performed over the entire image and sequential processing is performed on an input image so as to make it possible to acquire temporal movement of the subject. Furthermore, in a case where a vehicle is moving, detecting of the moving object is performed by removing an amount of movement of the background accompanied by the movement of the vehicle. Estimation of the movement of the background is described in, for example, Non-patent literature: Masahiro Kiyohara, et al., "Development of a moving object detection technology for vehicle circumference monitoring" real-use workshop of ViEW vision technology (Dec. 8-9, 2011, Yokohama) pp.275-280. As the detection result, for example, there is a vector quantity indicating the direction and magnitude of movement for each block area. However, the movement detection method of the subject is not limited thereto.

107 indicates an object recognition unit and the object recognition unit receives the detection results caused by the distance detection unit 105 and the moving object detection unit 106 and compares and references coordinate positions on the images to recognize a distance of a moving object. The object recognition unit 107 outputs information of the object recognition result to the outside of the image acquisition device 1.

After object recognition processing by using three images is ended, the object recognition unit 107 may output a notification that object recognition processing is ended to the image-acquisition timing signal generation unit 104 so as to allow the image-acquisition timing signal generation unit 104 to output a next image-acquisition timing signal.

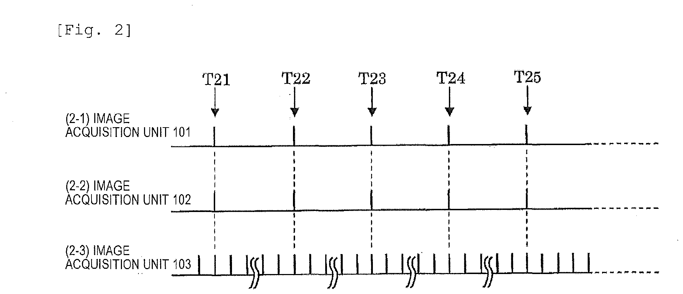

Fig. 2 is a diagram illustrating an example of timing of a pulse waveform of an image-acquisition timing signal, which is generated by and output from the image-acquisition timing signal generation unit 104. In the figure, (2-1) indicates an image-acquisition timing signal to be output to the image acquisition unit 101. Similarly, (2-2) and (2-3) indicate image-acquisition timing signals to be respectively output to the image acquisition unit 102 and the image acquisition unit 103.

For example, in (2-1) and (2-2), the image-acquisition timing signals are simultaneously output to the image acquisition units 101 and 102 in a period of 30 pulses per second and in (2-3), the image-acquisition timing signal is output to the image acquisition unit 103 in a period of 480 pulses per second. In this case, although not illustrated, a timing signal of 16 pulses is output in (2-3) during a time-period of one pulse of each of (2-1) and (2-2). The image-acquisition timing signals are in synchronization with each other and the image-acquisition timing signals of (2-1), (2-2), and (2-3) are aligned and output at image-acquisition timing T21, T22, T23, T24, and T25 and in this case, the image acquisition units 101, 102, and 103 simultaneously acquire images.

That is, in a case where it is intended to detect the distance from the images acquired by the image acquisition unit 101 and the image acquisition unit 102, the image generated at the same time is acquired in the image acquisition unit 103 and thus, it is possible to accurately perform comparing and referencing of the image at the time of performing distance object recognition of the moving object described above. It is unnecessary to capture an image at the same time and it is possible to photograph an image by intentionally deviating image-acquisition time for predetermined time.

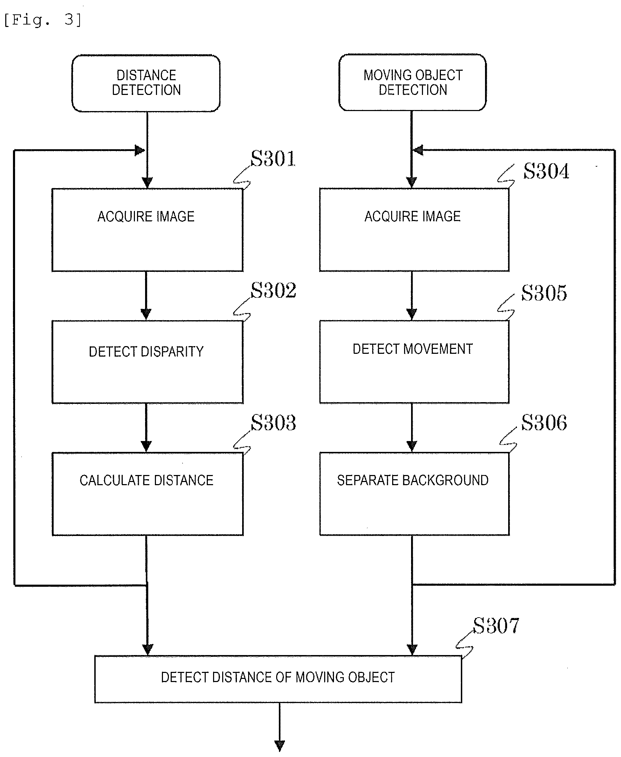

Fig. 3 is a diagram illustrating a processing flow of an embodiment of the image acquisition device of the present invention. As described above, the distance of a subject is detected by the image acquisition units 101 and 102 and the moving object is detected by the image acquisition unit 103.

First, images are photographed by the image acquisition units 101 and 102 (S301: S denotes a step) and disparity is detected from the two acquired images (S302). Next, the distance is calculated from the disparity detected as described above (S303). Processing of S301, S302, and S303 is repeated in periods of image-acquisition timing (2-1) and (2-2) illustrated in Fig. 2.

The moving object is detected from the image photographed by the image acquisition unit 103. As described above, the image is photographed by the image acquisition unit 103 (S304) and the movement of the subject is detected from the acquired image (S305). Next, the amount of movement of the background is removed (S306). Processing of S304, S305, and S306 is repeated in a period of image-acquisition timing (2-3) illustrated in Fig. 2. The distance of the moving object is recognized in the object recognition unit 107 (S307).

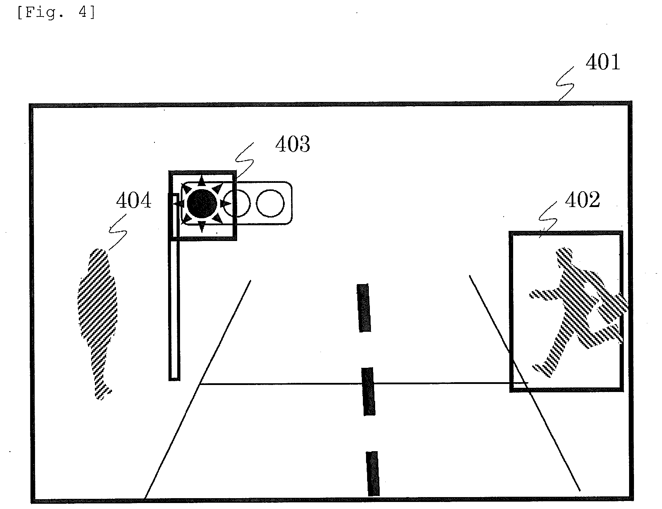

Fig. 4 is a diagram illustrating an example of an image acquired by an embodiment of the image acquisition device of the present invention. 401 indicates an image acquired by the image acquisition unit 103 at a certain point in time and the image acquisition units 101 and 102 also photograph and acquire substantially the same images. 402, 403, and 404 indicate subjects and the subjects are assumed to be located at substantially the same distance. The frames within the image are not present in the acquired image and are for explicitly indicating recognized moving objects.

402 indicates a situation in which a pedestrian who dashed out and entered a photographing range is caught and recognized as a moving object and 403 indicates a situation in which lighting of green of traffic signals is recognized as a moving object. Traffic signals use a power source obtained by rectifying a commercial AC electric power source and thus, flash at 100 Hz or 120 Hz (so-called dynamic lighting). Accordingly, for example, in a case where photographing is performed in a period of 30 pulses per second, the traffic signals are seen as if the traffic signals are flickering or being turned-off.

As in the present embodiment, for example, photographing is performed in a period of 480 images per second so as to make it possible to accurately grasp a period during which the traffic signals are lighting. 404 is also a pedestrian and is located at substantially the same distance as the subjects 402 and 403 but the pedestrian stays still and thus, the pedestrian is not recognized as the moving object. As such, according to the present embodiment, it is possible to accurately grasp a person who dashes out, a traffic signal apparatus, or a display which is being dynamically lit other than the person and the apparatus.

According to the present embodiment, the distance of a subject is detected by two image acquisition units and the moving object is detected by another image acquisition unit at a frame rate higher than that for distance detection so as to make it possible to quickly detect the distance of the moving object and improve safety. The image acquisition unit that acquires an image at the high frame rate is independent of the image acquisition units for detecting the distance and thus, the image acquisition unit that acquires an image at the high frame rate can be implemented in addition to a conventional distance detection function without limiting the distance detection function.

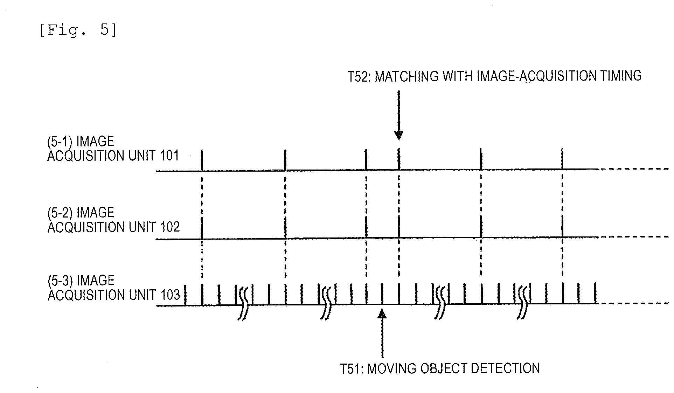

Fig. 5 is a diagram illustrating another embodiment of timing of a pulse waveform of an image-acquisition timing signal, which is generated by and output from the image-acquisition timing signal generation unit 104. In the figure, (5-1) and (5-2) are image-acquisition timing signals to be respectively output to the image acquisition units 101 and 102. (5-3) indicates an image-acquisition timing signal to be output to the image acquisition unit 103.

In the figure, in a case where a person who dashes out described above is detected from the image, which is photographed in the image acquisition unit 103, by the moving object detection unit 106 as a moving object at image-acquisition timing T51, the moving object detection unit 106 notifies the image-acquisition timing signal generation unit 104 that the person who dashes out is detected. The image-acquisition timing signal generation unit 104 receives the notification and outputs the image-acquisition timing signals to the image acquisition units 101 and 102 at image-acquisition timing T52.

Since it is on the way to image-acquisition, an image photographed by an image-acquisition timing signal immediately before the image-acquisition timing T52 is discarded, but it is possible to quickly acquire a distance of the moving object by retrying image-acquisition from the image-acquisition timing T52. In a case where a display which is being dynamically lighting like the traffic signals described above is caught, it is possible to output the image-acquisition timing signal in accordance with timing when the display is being lit from variation of the brightness signal in the moving object detection unit 106.

In this case, in the distance detection unit 105, it can be assumed that the traffic signals are always in a state of being lit and thus, a brightness value in a case of detecting disparity is not influenced by image-acquisition timing and it is possible to accurately calculate the distance. In this case, it is possible to accurately determine a color of a signal being lit by using color pixel sensors as the image sensors of the image acquisition units 101 and 102.

In this case, the image sensor of the image acquisition unit 103 detects the moving object by variation of the brightness signal and thus the image sensor may be a black-and-white image sensor and cost reduction of a device can be achieved.

According to the present embodiment, when the distance of a subject is detected by two image acquisition units and the moving object is detected by another image acquisition unit at a frame rate higher than that for distance detection, a distance detection operation is performed by being matched with a state of the moving object and thus it is possible to quickly detect the distance of the moving object and improve safety.

### (Second embodiment)

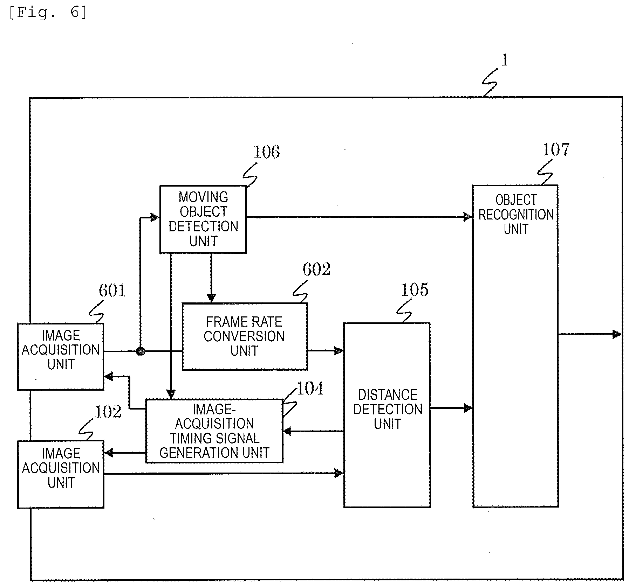

Fig. 6 is a diagram illustrating a configuration of an image acquisition device of a second embodiment of the present invention. In the figure, 601 indicates an image acquisition unit and 602 indicates a frame rate conversion unit. In the present embodiment, two image acquisition units of the image acquisition unit 601 and the image acquisition unit 102 are provided as image acquisition units. The image acquisition unit 601 and the image acquisition unit 102 are installed to be apart in right and left sides by a predetermined distance and a distance to a subject can be calculated from disparity of images photographed by the image acquisition unit 601 and the image acquisition unit 102. The image-acquisition timing signal generation unit 104 outputs the image-acquisition timing signals to the image acquisition unit 601 and the image acquisition unit 102.

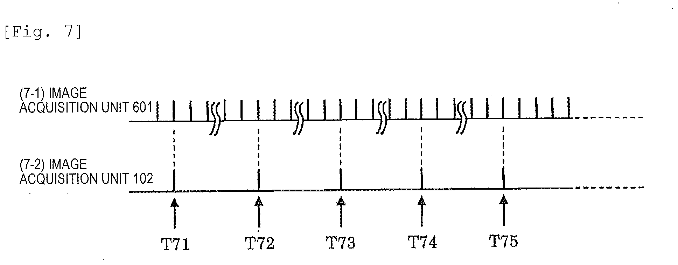

Fig. 7 is a diagram illustrating an example of timing of an image-acquisition timing signal, which is generated by and output from the image-acquisition timing signal generation unit 104 in the image acquisition device illustrated in Fig. 6. In the figure, (7-1) is an image-acquisition timing signal to be output to the image acquisition unit 601 and (7-2) is an image-acquisition timing signal to be output to the image acquisition unit 102. In (7-1), for example, the image-acquisition timing signal is output to the image acquisition unit 601 in a period of 480 pulses per second and in (7-2), the image-acquisition timing signal is output to the image acquisition unit 102 in a period of 30 pulses per second.

The image-acquisition timing signals are synchronized with each other and the image-acquisition timing signals of (7-1) and (7-2) are simultaneously aligned and output at image-acquisition timing T71, T72, T73, T74, and T75 and in this case, the image acquisition units 601 and 102 simultaneously acquire images.

Description will be made by referring back to Fig. 6. As described above, the image acquisition unit 601 and the image acquisition unit 102 perform image-acquisition according to the image-acquisition timing signals output from the image-acquisition timing signal generation unit 104. The frame rate conversion unit 602 is inserted between the image acquisition unit 601 and the distance detection unit 105. The frame rate conversion unit 602 lowers a frame rate of the input image and outputs the frame rate to the distance detection unit 105.

A frame rate conversion includes, for example, a method for thinning out input images and outputting the images, a method for averaging and outputting a plurality of images, and the like. Here, the images at the image-acquisition timing T71, T72, T73, T74, and T75 of Fig. 7 are output to the distance detection unit 105 and images other than those are discarded. With this, images photographed by the image acquisition unit 601 and the image acquisition unit 102 at the same timing are input to the distance detection unit 105 at 30 images per second.

Subsequent operations are the same as those of the first embodiment, and the distance of the subject is detected by using disparity of the images acquired at the same timing by the image acquisition unit 601 and the image acquisition unit 102 in the distance detection unit 105 and the image acquired by the image acquisition unit 601 is input to the moving object detection unit 106 and the moving object is detected. The object recognition unit 107 receives the detection results by the distance detection unit 105 and the moving object detection unit 106 and compares and references coordinate positions on the images to recognize a distance of the moving object.

In the present embodiment, the image acquisition units are configured by two image acquisition units of the image acquisition unit 601 and the image acquisition unit 102, the moving object detection is performed from the image photographed at a high frame rate in the image acquisition unit 601, the images are thinned out so as to be matched with the frame rate and the image-acquisition timing of the image photographed in the image acquisition unit 102 and are output to the distance detection unit 105 in the frame rate conversion unit 602, and thus it is possible to implement the image acquisition device at low cost compared to the first embodiment of the image acquisition device of the present invention and obtain a distance detection function of similar performance. Since just the two image acquisition units are necessary, it is possible to reduce the weight of the image acquisition unit side, lower power consumption thereof, and make a casing smaller, dimension restrictions on installation of the image acquisition device in the vehicle can be reduced, and cost can be reduced. Also, the image acquisition unit 102 is allowed to photograph at a high frame rate which is the same as that of the image acquisition unit 601 and similarly, a frame rate conversion unit may be inserted between the image acquisition unit 102 and the distance detection unit 105. In this case, the image acquisition unit 601 and the image acquisition unit 102 can adopt image sensors having the same performance.

### (Third embodiment)

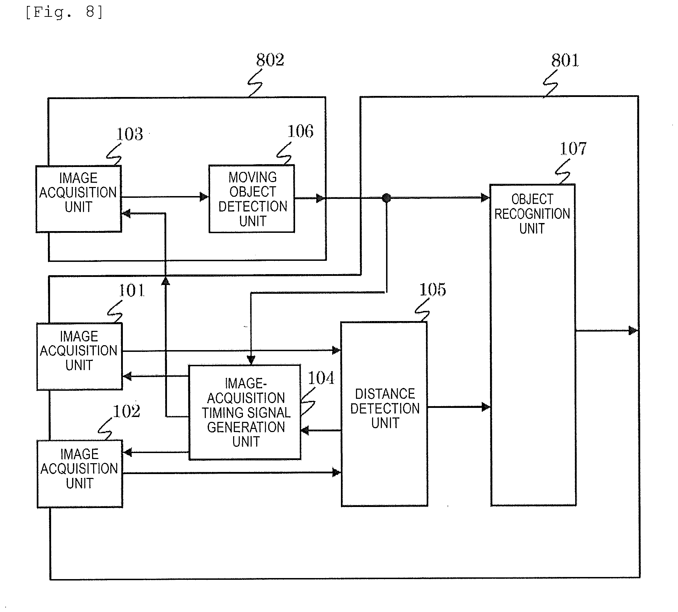

Fig. 8 is a diagram illustrating a configuration of a third embodiment of an image acquisition device of the present invention. In the present embodiment, the image acquisition unit 103 and the moving object detection unit 106 of the first embodiment are accommodated in a separate casing and are set as a moving object image acquisition unit denoted by 802 and remaining portions are set as a disparity image acquisition unit denoted by 801. In this case, a configuration in which the moving object image acquisition unit 802 is added to the disparity image acquisition unit 801 can be made and it becomes easy to separately provide a device which performs distance detection only and a device which performs the moving object detection in addition to the distance detection. In a case of this embodiment, an image itself is not output between the disparity image acquisition unit 801 and the moving object image acquisition unit 802 and thus, it is possible to reduce an amount of data to be transmitted.

### (Fourth embodiment)

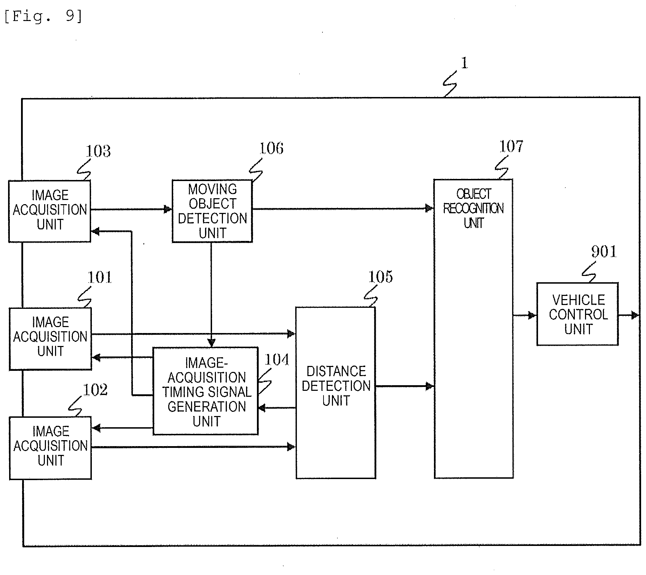

Fig. 9 is a diagram illustrating a configuration of a fourth embodiment of an image acquisition device of the present invention. The image acquisition device 1 is mounted on a vehicle such as an automobile and in the figure, 901 indicates a vehicle control unit. The output of the object recognition unit 107 is input to the vehicle control unit 901. The vehicle control unit 901 receives an object recognition result by the object recognition unit 107 and performs control on other devices (not illustrated) of the vehicle. Control of the vehicle includes lighting of a warning lamp or generation of a warning sound to a driver due to a person who dashes out or detecting of a red signal or a road sign, deceleration control by braking by a brake, stop control, throttle control or brake control when following a preceding vehicle, steering angle control for collision avoidance or lane keeping other than those control, and the like. The pieces of vehicle control information are output to other devices (not illustrated) from the image acquisition device 1 through an in-vehicle network. In the figure, an example in which the vehicle control unit 901 is accommodated in the same casing as that of the image acquisition device 1 is illustrated, but is not limited thereto, and as described above, the image acquisition units 101, 102, and 103 may be accommodated in a separate casing.

### (Fifth embodiment)

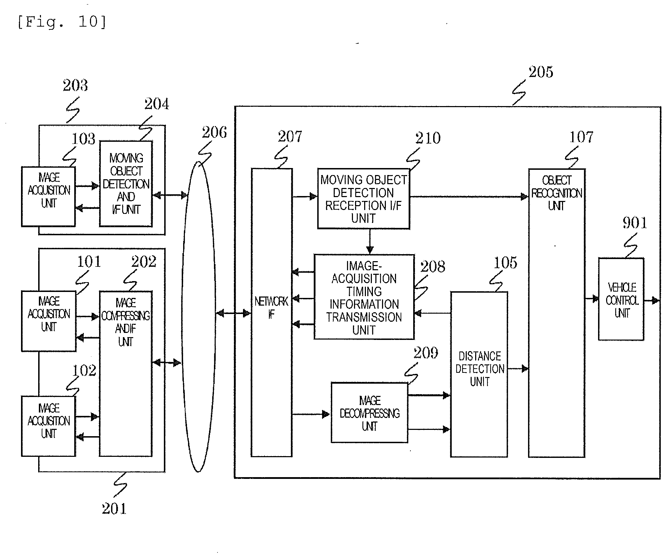

Fig. 10 is a diagram illustrating a configuration of a fifth embodiment of an image acquisition device of the present invention. 201 indicates a network image acquisition unit and 203 indicates a network moving object detection unit. 206 indicates a local area network (LAN) and 205 indicates a control unit. The network image acquisition unit 201 and the network moving object detection unit 203 are connected to the control unit 205 through the LAN 206. 202 indicates an image compressing and interface unit, 204 indicates a moving object detection and interface unit, 207 indicates a network interface unit, 208 indicates an image-acquisition timing information transmission unit, 209 indicates an image decompressing unit, and 210 indicates a moving object detection reception interface unit.

The image compressing and interface unit 202 compresses the images photographed by the image acquisition unit 101 and the image acquisition unit 102, transmits the images to the LAN 206, and receives image-acquisition timing information sent from the LAN 206 to deliver the image-acquisition timing information to the image acquisition units 101 and 102. In order to reduce processing time for image compressing, an intra-frame compressing method in which compressing is performed within one image may be used without using time-based correlation between a plurality of images. It may be changed by selecting an image compressing encoding method. The image compressing and interface unit 202 generates compressed and encoded data and transmits the data according to a prescribed network protocol.

In the control unit 205, receiving of compressed image data and transmitting of the image-acquisition timing information are performed through the LAN 206 in the network interface unit 207. The image-acquisition timing information transmission unit 208 transmits the image-acquisition timing information indicating image-acquisition timing at which the respective image acquisition units 101, 102, and 103 acquire images. In the present embodiment, a mechanism that synchronizes time is provided between the network image acquisition unit 201, the network moving object detection unit 203, and the control unit 205.

As a method for synchronizing time, for example, a method described in IEEE 1588 or the IEEE 802.1 AVB-compliant scheme can be used. Time is periodically synchronized between devices connected to a network using such a method for transmitting and receiving time information. For example, an oscillation period of a reference signal is adjusted based on time information using, for example, a phase locked loop (PLL) in the network image acquisition unit 201.

Thus, it is possible to synchronize time by causing periods of the reference signals to coincide with each other between devices. In this state, the absolute time of time being synchronized, relative time from the absolute time, a time interval, or the like, as the image-acquisition timing information, is transmitted so as to make it possible to match the image-acquisition timing. The image-acquisition timing information is transmitted to the image acquisition units 101, 102, and 103, for example, after power is supplied. In the present embodiment, the same image-acquisition timing information is transmitted to the image acquisition units 101 and 102 and image-acquisition timing information indicating that an image is to be acquired at a higher frame rate than that of the image acquisition units 101 and 102 is transmitted to the image acquisition unit 103 so as to make it possible to capture an image at the image-acquisition timing illustrated in Fig. 2 described above. In a case where image-acquisition timing information is relative time or a time interval, images are acquired according to the received image-acquisition timing information while referring to time synchronized between devices in the image acquisition units 101, 102, and 103 and thus, there is no need to send the image-acquisition timing information every time.

The image compressing and interface unit 202 and the moving object detection and interface unit 204 generate the pulse-shaped image-acquisition timing signals of the embodiments described above based on the received image-acquisition timing information and output the image-acquisition timing signals to the image acquisition units 101, 102, and 103.

Compressed image data received in the network interface unit 207 of the control unit 205 is expanded to the original image in the image decompressing unit 209 and the image photographed by the image acquisition unit 101 and the image photographed by the image acquisition unit 102 are output to the distance detection unit 105.

On the other hand, in the network moving object detection unit 203, a moving object is detected from the image acquired by the image acquisition unit 103 based on the image-acquisition timing information received in the moving object detection and interface unit 204. A detection method may be a method similar to that of the embodiments described above. A vector quantity for each block which is a moving object detection result is converted into a predetermined format and transmitted to the control unit 205 through the LAN 206. In the control unit 205, the format of moving object detection result received in the network interface unit 207 is converted into the vector quantity for each block in the moving object detection reception interface unit 210. Subsequent operations are similar to those of the first embodiment.

According to the present embodiment, the image or image-acquisition timing information is sent and received through the LAN 206 and thus it is possible to reduce a processing amount of the image acquisition unit side and it becomes possible to reduce the weight of the image acquisition unit side, lower power consumption thereof, and make a casing smaller, and therefore dimension restrictions on installation of the image acquisition device in the vehicle can be reduced. It can be configured in such a way that the network moving object detection unit 203 is added to an image acquisition device configured with the network image acquisition unit 201 and the control unit 205 and it becomes easy to separately provide a device which performs the distance detection only and a device which performs the moving object detection in addition to the distance detection. An image itself is not output between the network moving object detection unit 203 and the control unit 205 and thus, it is possible to reduce an amount of data to be transmitted.

As described above, it is possible to provide a low cost, high performance device capable of detecting the distance of a subject by two image acquisition units and detecting the moving object at a frame rate higher than that for distance detection to quickly detect the distance of the moving object.

### Reference Signs List

1: image acquisition device
101 to 103: image acquisition unit
104: image-acquisition timing signal generation unit
105: distance detection unit
106: moving object detection unit
107: object recognition unit
401: photographed image
402 to 404: subject
601: image acquisition unit
602: frame rate conversion unit
801: disparity image acquisition unit
802: moving object image acquisition unit
901: vehicle control unit
201: network image acquisition unit
202: image compressing and interface unit
203: network moving object detection unit
204: moving object detection and interface unit
205: control unit
206: LAN
207: network interface unit
208: image-acquisition timing information transmission unit
209: image decompressing unit
210: moving object detection reception interface unit

## Claims

1. An image acquisition device (1) comprising:
a plurality of image acquisition units, at least two of which (101, 102) are image acquisition units configured to acquire an image at a first frame rate, and at least one of which (103) is an image acquisition unit configured to acquire an image at a second frame rate higher than the first frame rate;
a moving object detection unit (106) configured to detect a moving object based on an image obtained by the image acquisition unit (103) configured to acquire an image at the second frame rate; and
a distance detection unit (105) configured to detect a distance to a subject based on disparity between a plurality of images acquired by the image acquisition units (101, 102) configured to acquire an image at the first frame rate, wherein said image acquisition units (101, 102) are installed to be apart in right and left sides having a predetermined distance between each other; and
an image-acquisition timing signal generation unit (104) configured to simultaneously output to the image acquisition units (101, 102) configured to acquire an image at the first frame rate image-acquisition timing signals corresponding to the first frame rate, and to output to the image acquisition unit(103) configured to detect a moving object based on an image obtained at a second frame rate image-acquisition timing signals corresponding to the second frame rate for acquiring images at synchronized timing to each of the plurality of image acquisition units (101, 102, 103),
wherein the plurality of image acquisition units (101, 102, 103) is configured to acquire images based on the respective input image-acquisition timing signals, and
in case a moving object is detected by the moving object detection unit (106) from an image captured by the image acquisition unit (103) configured to detect a moving object based on an image obtained at a second frame rate at a first image-acquisition timing (T51),
the image-acquisition timing signal generation unit (104) is configured to receive a notification from the moving object detection unit (106), and to output an image-acquisition timing signal to each of the image acquisition units (101, 102) configured to acquire an image at the first frame rate at a second image-acquisition timing (T52), wherein a time period between the first and the second image-acquisition timing (T51, T52) corresponds to a frame period of the second frame rate, and
each of the image acquisition units (101, 102) configured to acquire an image at the first frame rate is configured to acquire an image at the second image-acquisition timing (T52) for determining a distance of the moving object at a timing of the second frame rate.

2. The image acquisition device according to Claim 1, further comprising:
an object recognition unit (107) configured to recognize a distance to the moving object based on outputs of the moving object detection unit (106) and the distance detection unit (105).

3. The image acquisition device (1) according to Claim 1, further comprising:
a frame rate conversion unit (602) configured to convert a frame rate of an image acquired by the image acquisition unit (103) configured to acquire an image at the second frame rate to a frame rate determined by the image acquisition units (101, 102) configured to acquire an image at the first frame rate.

4. The image acquisition device (1) according to Claim 1,
wherein the image-acquisition timing signal generation unit (104) is configured to control the image-acquisition timing signal to be output to the plurality of image acquisition units based on the output of the moving object detection unit (106).

5. The image acquisition device (1) according to Claim 3,
wherein the frame rate conversion unit (602) is configured to perform control to convert the frame rate of the image acquired by the image acquisition unit (103) configured to acquire an image at the second frame rate based on the output of the moving object detection unit (106).

6. The image acquisition device (1) according to Claim 4,
wherein the image-acquisition timing signal generation unit (104) is configured to control an image-acquisition timing signal to be output to the image acquisition units (101, 102) configured to acquire an image at the first frame rate based on the output of the moving object detection unit (106).

7. The image acquisition device (1) according to Claim 1,
wherein the plurality of image acquisition units and the image-acquisition timing signal generation unit (104) are connected to each other through a network,
the image-acquisition timing signal generation unit (104) is configured to transmit image-acquisition timing information to each of the plurality of image acquisition units, and
the plurality of image acquisition units is configured to acquire images based on the image-acquisition timing information from the network.

8. The image acquisition device (1) according to Claim 1,
wherein the image acquisition unit, the moving object detection unit (106), and the image-acquisition timing signal generation unit (104) are connected to one another through a network.

9. The image acquisition device (1) according to Claim 2, further comprising:
a vehicle control unit (901) configured to control motion of a vehicle,
wherein the vehicle control unit (901) is configured to control the vehicle based on an object recognition result of the object recognition unit (107).

## Patentansprüche

1. Bilderfassungsvorrichtung (1), die umfasst:
mehrere Bilderfassungseinheiten, wovon mindestens zwei (101, 102) Bilderfassungseinheiten sind, die konfiguriert sind, ein Bild mit einer ersten Rahmenrate zu erfassen, und wovon mindestens eine (103) eine Bilderfassungseinheit ist, die konfiguriert ist, ein Bild mit einer zweiten Rahmenrate, die höher als die erste Rahmenrate ist, zu erfassen;
eine Einheit zur Detektion eines sich bewegenden Objekts (106), die konfiguriert ist, ein sich bewegendes Objekt anhand eines Bildes, das durch die Bilderfassungseinheit (103) erfasst wird, die konfiguriert ist, ein Bild mit der zweiten Rahmenrate zu erfassen, zu detektieren; und
eine Abstandsdetektionseinheit (105), die konfiguriert ist, einen Abstand zu einem Objekt anhand einer Disparität zwischen mehreren Bildern, die durch die Bilderfassungseinheiten (101, 102) erfasst werden, die konfiguriert sind, ein Bild mit der ersten Rahmenrate zu erfassen, zu detektieren, wobei die Bilderfassungseinheiten (101, 102) so installiert sind, dass sie in rechten und linken Seiten mit einem vorgegebenen Abstand zwischen ihnen beabstandet sind; und
eine Bilderfassungszeitsignal-Erzeugungseinheit (104), die konfiguriert ist, gleichzeitig an die Bilderfassungseinheiten (101, 102), die konfiguriert sind, ein Bild mit der ersten Rahmenrate zu erfassen, Bilderfassungszeitsignale auszugeben, die der ersten Rahmenrate entsprechen, und an die Bilderfassungseinheit (103), die konfiguriert ist, ein sich bewegendes Objekt anhand eines Bildes, das mit einer zweiten Rahmenrate erfasst wird, zu detektieren, Bilderfassungszeitsignale auszugeben, die der zweiten Rahmenrate entsprechen, um Bilder zu einem synchronisierten Zeitpunkt bei jeder der mehreren Bilderfassungseinheiten (101, 102, 103) zu erfassen,
wobei die mehreren Bilderfassungseinheiten (101, 102, 103) konfiguriert sind, Bilder anhand der jeweiligen eingegebenen Bilderfassungszeitsignale zu erfassen, und
falls ein sich bewegendes Objekt durch die Einheit zur Detektion eines sich bewegenden Objekts (106) aus einem Bild, das durch die Bilderfassungseinheit (103) aufgenommen wird, die konfiguriert ist, ein sich bewegendes Objekt anhand eines Bildes, das mit einer zweiten Rahmenrate erhalten wird, zu detektieren, zu einem ersten Bilderfassungszeitpunkt (T51) detektiert wird,
die Bilderfassungszeitsignal-Erzeugungseinheit (104) konfiguriert ist, eine Benachrichtigung von der Einheit zur Detektion eines sich bewegenden Objekts (106) zu empfangen und ein Bilderfassungszeitsignal an jede der Bilderfassungseinheiten (101, 102), die konfiguriert sind, ein Bild mit der ersten Rahmenrate zu erfassen, zu einem zweiten Bilderfassungszeitpunkt (T52) auszugeben, wobei eine Zeitperiode zwischen dem ersten und dem zweiten Bilderfassungszeitpunkt (T51, T52) einer Rahmenperiode der zweiten Rahmenrate entspricht, und
jede der Bilderfassungseinheiten (101, 102), die konfiguriert sind, ein Bild mit der ersten Rahmenrate zu erfassen, konfiguriert ist, ein Bild zu dem zweiten Bilderfassungszeitpunkt (T52) zu erfassen, um einen Abstand des sich bewegenden Objekts zu einem Zeitpunkt der zweiten Rahmenrate zu bestimmen.

2. Bilderfassungsvorrichtung nach Anspruch 1, die ferner umfasst:
eine Objekterkennungseinheit (107), die konfiguriert ist, einen Abstand zu dem sich bewegenden Objekt anhand von Ausgaben der Einheit zur Detektion eines sich bewegenden Objekts (106) und der Abstandsdetektionseinheit (105) zu erkennen.

3. Bilderfassungsvorrichtung (1) nach Anspruch 1, die ferner umfasst:
eine Rahmenratenumsetzungseinheit (602), die konfiguriert ist, eine Rahmenrate eines Bildes, das durch die Bilderfassungseinheit (103) erfasst wird, die konfiguriert ist, ein Bild mit der zweiten Rahmen zu erfassen, in eine Rahmenrate umzusetzen, die durch die Bilderfassungseinheiten (101, 102) bestimmt wird, die konfiguriert sind, ein Bild mit der ersten Rahmenrate zu erfassen,

4. Bilderfassungsvorrichtung (1) nach Anspruch 1,
wobei die Bilderfassungszeitsignal-Erzeugungseinheit (104) konfiguriert ist, anhand der Ausgabe der Einheit zur Detektion eines sich bewegenden Objekts (106) zu steuern, dass das Bilderfassungszeitsignal an die mehreren Bilderfassungseinheiten ausgegeben wird.

5. Bilderfassungsvorrichtung (1) nach Anspruch 3,
wobei die Rahmenratenumsetzungseinheit (602) konfiguriert ist, anhand der Ausgabe der Einheit zur Detektion eines sich bewegenden Objekts (106) eine Steuerung auszuführen, um die Rahmenrate des Bildes, das durch die Bilderfassungseinheit (103) erfasst wird, die konfiguriert ist, ein Bild mit der zweiten Rahmenrate zu erfassen, umzusetzen.

6. Bilderfassungsvorrichtung (1) nach Anspruch 4,
wobei die Bilderfassungszeitsignal-Erzeugungseinheit (104) konfiguriert ist, anhand der Ausgabe der Einheit zur Detektion eines sich bewegenden Objekts (106) zu steuern, dass ein Bilderfassungszeitsignal an die Bilderfassungseinheiten (101, 102) ausgegeben wird, die konfiguriert sind, ein Bild mit der ersten Rahmenrate zu erfassen.

7. Bilderfassungsvorrichtung (1) nach Anspruch 1,
wobei die mehreren Bilderfassungseinheiten und die Bilderfassungszeitsignal-Erzeugungseinheit (140) miteinander durch ein Netz verbunden sind,
die Bilderfassungszeitsignal-Erzeugungseinheit (104) konfiguriert ist, die Bilderfassungszeitinformationen an jede der mehreren Bilderfassungseinheiten zu senden, und
die mehreren Bilderfassungseinheiten konfiguriert sind, Bilder anhand der Bilderfassungszeitinformationen von dem Netz zu erfassen.

8. Bilderfassungsvorrichtung (1) nach Anspruch 1,
wobei die Bilderfassungseinheit, die Einheit zur Detektion eines sich bewegenden Objekts (106) und die Bilderfassungszeitsignal-Erzeugungseinheit (104) miteinander durch ein Netz verbunden sind.

9. Bilderfassungsvorrichtung (1) nach Anspruch 2, die ferner umfasst:
eine Fahrzeugsteuereinheit (901), die konfiguriert ist, die Bewegung eines Fahrzeugs zu steuern,
wobei die Fahrzeugsteuereinheit (901) konfiguriert ist, das Fahrzeug anhand eines Objekterkennungsergebnisses der Objekterkennungseinheit (107) zu steuern.

## Revendications

1. Dispositif d'acquisition d'image (1) comprenant :
une pluralité d'unités d'acquisition d'image, dont au moins deux (101, 102) sont des unités d'acquisition d'image configurées pour acquérir une image à une première cadence de trame, et dont au moins une (103) est une unité d'acquisition d'image configurée pour acquérir une image à une seconde cadence de trame plus élevée que la première cadence de trame ;
une unité de détection d'objet mobile (106) configurée pour détecter un objet mobile sur la base d'une image obtenue par l'unité d'acquisition d'image (103) configurée pour acquérir une image à la seconde cadence de trame ; et
une unité de détection de distance (105) configurée pour détecter une distance à un sujet sur la base d'une disparité entre une pluralité d'images acquises par les unités d'acquisition d'image (101, 102) configurées pour acquérir une image à la première cadence de trame, lesdites unités d'acquisition d'image (101, 102) étant installées de façon à être à distance dans des côtés de droite et de gauche ayant une distance prédéterminée entre l'un et l'autre ; et
une unité de génération de signal de temporisation d'acquisition d'image (104) configurée pour sortir simultanément vers les unités d'acquisition d'image de trame (101, 102) configurées pour acquérir une image à la première cadence de trame, des signaux de temporisation d'acquisition d'image correspondant à la première cadence de trame, et pour sortir vers l'unité d'acquisition d'image (103) configurée pour détecter un objet mobile sur la base d'une image obtenue à une seconde cadence de trame, des signaux de temporisation d'acquisition d'image correspondant à la seconde cadence de trame pour acquérir des images à une temporisation synchronisée pour chacune de la pluralité d'unités d'acquisition d'image (101, 102, 103),
dans lequel la pluralité d'unités d'acquisition d'image (101, 102, 103) sont configurées pour acquérir des images sur la base des signaux de temporisation d'acquisition d'image entrés respectifs et
dans un cas où un objet mobile est détecté par l'unité de détection d'objet mobile (106) à partir d'une image capturée par l'unité d'acquisition d'image (103) configurée pour détecter un objet mobile sur la base d'une image obtenue à une seconde cadence de trame à une première temporisation d'acquisition d'image (T51),
l'unité de génération de signal de temporisation d'acquisition d'image (104) est configurée pour recevoir une notification depuis l'unité de détection d'objet mobile (106), et pour sortir un signal de temporisation d'acquisition d'image vers chacune des unités d'acquisition d'image (101, 102) configurées pour acquérir une image à la première cadence de trame à une seconde temporisation d'acquisition d'image (T52), dans lequel une période temporelle entre la première et la seconde temporisation d'acquisition d'image (T51, T52) correspond à une période de trame de la seconde cadence de trame, et
chacune des unités d'acquisition d'image (101, 102) configurées pour acquérir une image à la première cadence de trame est configurée pour acquérir une image à la seconde temporisation d'acquisition d'image (T52) pour déterminer une distance de l'unité mobile à une temporisation de la seconde cadence de trame.

2. Dispositif d'acquisition d'image selon la revendication 1, comprenant en outre :
une unité de reconnaissance d'objet (107) configurée pour reconnaître une distance à l'objet mobile sur la base de sorties de l'unité de détection d'objet mobile (106) et de l'unité de détection de distance (105).

3. Dispositif d'acquisition d'image (1) selon la revendication 1, comprenant en outre :
une unité de conversion de cadence de trame (602) configurée pour convertir un cadence de trame d'une image acquise par l'unité d'acquisition d'image (103) configurée pour acquérir une image à la seconde cadence de trame, en une cadence de trame déterminée par les unités d'acquisition d'image (101, 102) configurées pour acquérir une image à la première cadence de trame.

4. Dispositif d'acquisition d'image (1) selon la revendication 1,
dans lequel l'unité de génération de signal de temporisation d'acquisition d'image (104) est configurée pour commander le signal de temporisation d'acquisition d'image devant être sorti vers la pluralité d'unités d'acquisition d'image sur la base de la sortie de l'unité de détection d'objet mobile (106).

5. Dispositif d'acquisition d'image (1) selon la revendication 3,
dans lequel l'unité de conversion de cadence de trame (602) est configurée pour effectuer une commande pour convertir la cadence de trame de l'image acquise par l'unité d'acquisition d'image (103) configurée pour acquérir une image à la seconde cadence de trame sur la base de la sortie de l'unité de détection d'objet mobile (106).

6. Dispositif d'acquisition d'image (1) selon la revendication 4,
dans lequel l'unité de génération de signal de temporisation d'acquisition d'image (104) est configurée pour commander un signal de temporisation d'acquisition d'image devant être sorti vers les unités d'acquisition d'image (101, 102) configurées pour acquérir une image à la première cadence de temporisation sur la base de la sortie de l'unité de détection d'objet mobile (106).

7. Dispositif d'acquisition d'image (1) selon la revendication 1,
dans lequel la pluralité d'unités d'acquisition d'image et l'unité de génération de signal de temporisation d'acquisition d'image (104) sont connectées les unes aux autres par l'intermédiaire d'un réseau,
l'unité de génération de signal de temporisation d'acquisition d'image (104) est configurée pour transmettre des informations de temporisation d'acquisition d'images à chacune de la pluralité d'unités d'acquisition d'image, et
la pluralité d'unités d'acquisition d'image sont configurées pour acquérir des images sur la base des informations de temporisation d'acquisition d'image provenant du réseau.

8. Dispositif d'acquisition d'image (1) selon la revendication 1,
dans lequel l'unité d'acquisition d'image, l'unité de détection d'objet mobile (106), et l'unité de génération de signal de temporisation d'acquisition d'image (104) sont connectées les unes aux autres par l'intermédiaire d'un réseau.

9. Dispositif d'acquisition d'image (1) selon la revendication 2, comprenant en outre :
une unité de commande de véhicule (901) configurée pour commander un déplacement d'un véhicule,
dans lequel l'unité de commande de véhicule (901) est configurée pour commander le véhicule sur la base d'un résultat de reconnaissance d'objet de l'unité de reconnaissance d'objet (107).
